# EUROPEAN PATENT APPLICATION

(11) **EP 2 623 316 A1**
(43) Date of publication of application: **07.08.2013**
(21) Application number: 11829301.8
(22) Date of filing: 29.09.2011
(51) Int. Cl.: B32B 27/30, B32B 27/00, B44C 1/165

(54) **DECORATIVE SHEET AND DECORATIVE MOLDED PRODUCT**

(30) Priority: 29.09.2010 JP 2010219098
(71) Applicant: Dai Nippon Printing Co., Ltd., Tokyo 162-8001 (JP)
(72) Inventor: NODA, Akihisa, Tokyo 162-8001 (JP); ATAKE, Hiroyuki, Tokyo 162-8001 (JP); MEIKI, Yoshiyuki, Tokyo 162-8001 (JP); TAKANO, Mari, Tokyo 162-8001 (JP)
(74) Representative: Lamb, Martin John Carstairs
(86) International application number: PCT/JP2011/072430
(87) International publication number: WO 2012/043748

(57) **Abstract**

The present invention provides a decorative sheet and a decorative molded product with excellent productivity that imparts the decorative molded product with superior stain resistance and moldability. The decorative sheet and the decorative molded product sequentially have a mold release layer (12) and a surface protection layer (13) on one side of a substrate (11), the surface protection layer (13) being composed of an ionizing radiation-curable resin composition containing a polyfunctional (meth)acrylate monomer and a thermoplastic resin with a molecular weight of 175 to 1000, the thermoplastic resin having a predetermined weight average molecular weight, and the polyfunctional (meth)acrylate monomer and the thermoplastic resin being of predetermined mass ratios.

## Description

### TECHNICAL FIELD

The present invention relates to a decorative sheet and a decorative molded product.

### BACKGROUND ART

Conventionally, the injection-molding simultaneous transfer decorating method is used for decorating a resin compact with a complex surface profile such as a three-dimensional curve. According to the injection-molding simultaneous transfer decorating method, a decorative sheet is closely attached to the inner surface of a mold and then clamped, a molten injection resin is injected in the cavity, the injection resin is integrated with the decorative sheet, the decorating molded product is cooled and then removed from the mold, and the substrate sheet is released, so that an decorative molded product on which a transfer layer is transferred can be obtained.

The decorative molded product obtained in this way draws attention to the use for not only the conventionally applied fields of home electrical appliances, automobile interior parts, and the like but also, for example, the field of netbook computers associated with the personal-computer market being expanded in recent years, including mobile personal computers that can be carried in daily life, as well as the field of mobile phones. The members used in these fields require not only moldability but also contamination resistance to various articles for daily use to be applied to skin in daily life, for example, skin-care products such as sunscreens.

Conventionally, as a decorative sheet used for the decorating method as described above, for example, a transfer sheet having a transfer layer consisting of a release layer, an image layer, and an adhesive layer on a support sheet layer has been proposed (see Patent document 1). This proposed decorative sheet is to decorate a transferred body by transferring the transfer layer consisting of a release layer, an image layer, and an adhesive layer to the transferred body, so as to manufacture a decorative molded product. Since the surface of the transfer layer, specifically, the release layer of a decorative molded product is the outermost surface, this decorative sheet is not enough in terms of surface properties such as contamination resistance.

The decorative sheet used in the decorating method may further require the ease of manufacturing the decorative sheet, specifically productivity. Since the release layer as described above is provided in a decorative molded product, the release layer requires excellent moldability. Thus, as a resin forming a release layer resin that can improve the moldability, for example, a resin with a high molecular weight tends to be selected. However, if a resin with a high molecular weight is selected, the viscosity of the resin composition tends to be increased in general. This may be present a problem in which a printing plate and a nozzle are clogged with a resin composition forming a release layer , potentially causing the defective transfer of the resin composition, a so-called dried printing plate, so that the printability may be decreased and so that the productivity may significantly be decreased. Since excellent surface properties are contradicted with excellent productivity, it is desired that the balance of both features be appropriately adjusted according to different purposes and that a decorative sheet with a high level of these features be developed.

Patent document 1: JP2003-312193 A

### BRIEF DESCRIPTION OF THE DRAWINGS

Fig. 1 shows a pattern diagram illustrating the cross section of an example decorative sheet of the present invention.
Fig. 2 shows a pattern diagram illustrating the cross section of an example decorative molded product with a substrate sheet of the present invention.
Fig. 3 shows a pattern diagram illustrating the cross section of an example decorative molded product of the present invention.

### DISCLOSURE OF THE INVENTION

An objective of the present invention is to provide a decorative sheet and a decorative molded product under such a situation, in which the decorative sheet has excellent productivity and provides excellent contamination resistance and moldability to a decorative molded product.

As a result from the extensive studies to achieve a solution to the above-mentioned problem, the inventors have found that the decorative sheet sequentially provided with a mold release layer and a surface protection layer on the one side of a substrate sheet can solve this problem, in which the surface protection layer consists of an ionizing radiation curing resin composition containing a multi-functional (meth)acrylate monomer and a thermoplastic resin, the multi-functional (meth)acrylate monomer has a molecular weight of 175-1000, the thermoplastic resin has a predetermined weight-average molecular weight, and the multi-functional (meth)acrylate monomer and the thermoplastic resin are contained in a predetermined mass ratio. Specifically, the present invention relates to the below-mentioned decorative sheet and the below-mentioned decorative molded product.

1. A decorative sheet includes a mold release layer and a surface protection layer, the mold release layer and the surface protection layer being sequentially provided on the one side of a substrate sheet, in which the surface protection layer consists of an ionizing radiation curing resin composition containing a multi-functional (meth) acrylate monomer and a thermoplastic resin, the multi-functional (meth) acrylate monomer has a molecular weight of 175-1000, the thermoplastic resin has a standard polystyrene equivalent weight-average molecular weight of 100,000-250,000, and the mass ratio of the multi-functional (meth) acrylate monomer to the thermoplastic resin is 25:75-75:25.
2. A decorative sheet includes a mold release layer and a surface protection layer, the mold release layer and the surface protection layer being sequentially provided on the one side of a substrate sheet, in which the surface protection layer consists of an ionizing radiation curing resin composition containing a multi-functional (meth) acrylate monomer and a thermoplastic resin, the multi-functional (meth) acrylate monomer has a molecular weight of 175-1000, the thermoplastic resin has a standard polystyrene equivalent weight-average molecular weight of from 10,000 to less than 100,000, and the mass ratio of the multi-functional (meth)acrylate monomer to the thermoplastic resin is 10:90-75:25.
3. A decorative molded product with a substrate sheet includes a resin compact, an adhesive layer, a surface protection layer, a mold release layer, and a substrate sheet, the resin compact, the adhesive layer, the surface protection layer, the mold release layer, and the substrate sheet being sequentially provided, in which the surface protection layer consists of an ionizing radiation curing resin composition containing a multi-functional (meth)acrylate monomer and a thermoplastic resin, the multi-functional (meth) acrylate monomer has a molecular weight of 175-1000, the thermoplastic resin has a standard polystyrene equivalent weight-average molecular weight of 100, 000-250, 000, and the mass ratio of the multi-functional (meth)acrylate monomer to the thermoplastic resin is 25:75-75:25.
4. A decorative molded product includes a resin compact, an adhesive layer, and a surface protection layer, the resin compact, the adhesive layer, and the surface protection layer being sequentially provided, in which the surface protection layer consists of an ionizing radiation curing resin composition containing a multi-functional (meth) acrylate monomer and a thermoplastic resin, the multi-functional (meth)acrylate monomer has a molecular weight of 175-1000, the thermoplastic resin has a standard polystyrene equivalent weight-average molecular weight of 100,000-250,000, and the mass ratio of the multi-functional (meth) acrylate monomer to the thermoplastic resin is 25:75-75:25.
5. A decorative molded product with a substrate sheet includes a resin compact, an adhesive layer, a surface protection layer, a mold release layer, and a substrate sheet, the resin compact, the adhesive layer, the surface protection layer, the mold release layer, and the substrate sheet being sequentially provided, in which the surface protection layer consists of an ionizing radiation curing resin composition containing a multi-functional (meth)acrylate monomer and a thermoplastic resin, the multi-functional (meth) acrylate monomer has a molecular weight of 175-1000, the thermoplastic resin has a standard polystyrene equivalent weight-average molecular weight of from 10,000 to less than 100,000, and the mass ratio of the multi-functional (meth)acrylate monomer to the thermoplastic resin is 10:90-75:25.
6. A decorative molded product includes a resin compact, an adhesive layer, and a surface protection layer, the resin compact, the adhesive layer, and the surface protection layer being sequentially provided, in which the surface protection layer consists of an ionizing radiation curing resin composition containing a multi-functional (meth)acrylate monomer and a thermoplastic resin, the multi-functional (meth) acrylate monomer has a molecular weight of 175-1000, the thermoplastic resin has a standard polystyrene equivalent weight-average molecular weight of from 10,000 to less than 100,000, and the mass ratio of the multi-functional (meth) acrylate monomer to the thermoplastic resin is 10:90-75:25.

According to the present invention, a decorative sheet and a decorative molded product can be provided, in which the decorative sheet has excellent productivity and provides excellent contamination resistance and moldability to a decorative molded product.

### PREFERRED MODE FOR CARRYING OUT THE INVENTION

### Decorative sheet

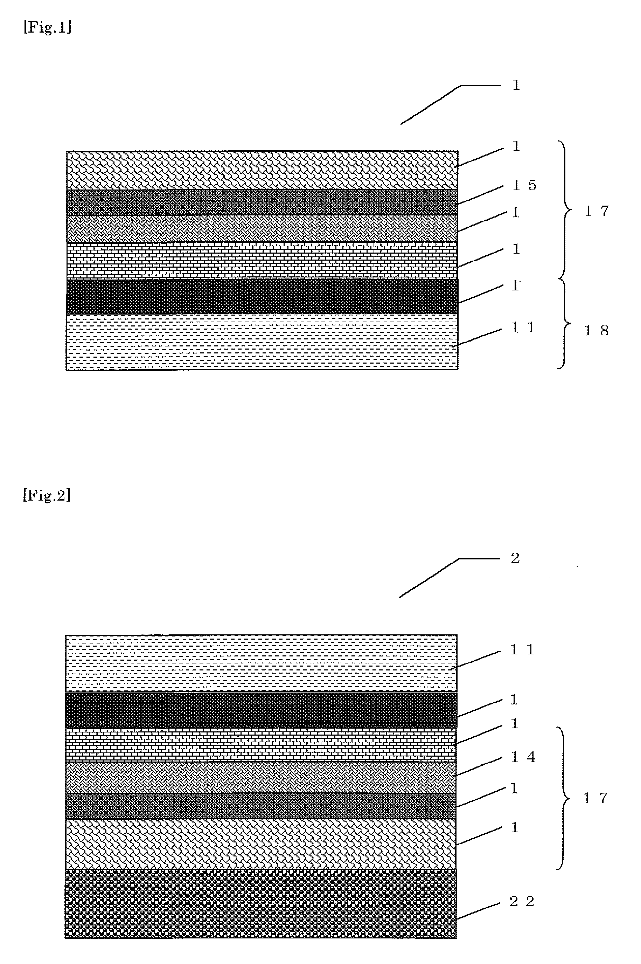

The decorative sheet of the present invention is sequentially provided with a mold release layer and a surface protection layer on the one side of a substratum sheet, in which the surface protection layer consists of an ionizing radiation curing resin composition containing a multi-functional (meth) acrylate monomer and a thermoplastic resin, the multi-functional (meth)acrylate monomer has a molecular weight of 175-1000, the thermoplastic resin has a predetermined weight-average molecular weight, and the multi-functional (meth)acrylate monomer and the thermoplastic resin are contained in a predetermined mass ratio. More specifically, in the ionizing radiation curing resin composition, (a) the thermoplastic resin has a standard polystyrene equivalent weight-average molecular weight of 100,000-250,000, and the mass ratio of the multi-functional (meth)acrylate monomer to the thermoplastic resin is 25:75-75:25 (hereinafter referred to as "aspect (a)," or (b) the thermoplastic resin has a standard polystyrene equivalent weight-average molecular weight of from 10,000 to less than 100,000, and the mass ratio of the multi-functional (meth) acrylate monomer to the thermoplastic resin is 10:90-75:25 (hereinafter referred to as "aspect (b)."
The present invention will be explained in reference to the attached drawings. Fig. 1 shows a pattern diagram illustrating the cross section of an example preferred embodiment of the decorative sheet of the present invention. The decorative sheet 10 of the present invention as shown in Fig. 1 has a mold release layer 12 and a surface protection layer 13 on a substrate sheet 11, in which a primer layer 14, a decoration layer 15, and an adhesive layer 16 are preferably sequentially laminated.

### Substrate sheet

As the substrate sheet 11, polyolefin resins such as polyethylene and polypropylene; vinyl resins such as polyvinyl chloride, polyvinylidene chloride, polyvinyl alcohol, an ethylene-vinyl acetate copolymer, and an ethylene-vinylalcohol copolymer; polyester resins such as polyethylene terephthalate, polybutylene terephthalate, and polyethylene naphthalate; acrylic resins such as polymethyl(meth)acrylate and polyethyl(meth)acrylate; a styrene resin such as polystyrene; elastomer resins such as an acrylonitrile-butadiene-styrene copolymer, cellulose triacetate, cellophane, polycarbonate, and polyurethane are used. Among these, a polyester resin, especially polyethylene terephthalate (hereafter referred to as "PET") is preferable due to its excellent moldability and releasability.

The thickness of the substrate sheet 11 is typically 10-150 µm, preferably 10-125 µm, more preferably 10-80 µm from the viewpoint of easy moldability, shape following capability, and handling.
For the substrate sheet 11, a single-layer sheet of these resins or a multilayer sheet of the same or different resins can be used.

The one or both sides of the substrate sheet 11 can be subjected to physical or chemical surface treatment by oxidation, unleveling, or the like to improve adhesion with the mold release layer as described below, if desired.
The oxidation includes, for example, the corona discharge treatment, chromium oxidation treatment, flame treatment, hot air treatment, and ozone-ultraviolet treatment
The unleveling includes, for example, sandblasting and solvent treatment. These surface treatments are appropriately selected depending on the type of substrate sheet, but in general, corona discharge treatment is preferably used from the viewpoint of the effect, operability, and the like.

The substrate sheet 11 may be subjected to a treatment for forming an adhesive layer in order to strengthen the adhesion between the substrate sheet 11 and a layer provided on the substrate sheet 11. As a commercially available substrate sheet, commercially available products to which surface treatment as described above has previously been applied, in which an adhesive layer is provided, and in which a mold release layer as described below is formed can be used.

### Mold release layer

Preferably, the mold release layer 12 is provided so that the transfer layer 17 sequentially provided with a surface protection layer 13, a primer layer 14, which is optionally provided, a decoration layer 15, and an adhesive layer 16 can be easily released from the substrate sheet 11. The mold release layer 12 can help to surely and easily transfer the transfer layer 17 from the decorative sheet of the present invention to a transferred body and to surely release the release layer 18 consisting of the substrate sheet 11 and the mold release layer 12. The mold release layer 12 may be an entirely covering mold release layer covering the entire surface (expanding across the surface) of the substrate 11 as shown in Fig. 1, or may be provided a part of the surface. Typically, an entirely covering mold release layer is preferable in consideration of releasability.

The mold release layer 12 can be formed of thermoplastic resins such as a silicone resin, a fluorine resin, an acrylic resin (including, for example, an acrylic melamine resin), a polyester resin, a polyolefin resin, a polystyrene resin, a polyurethane resin, a cellulose resin, a vinyl chloride-vinyl acetate copolymer resin, nitrocellulose, a copolymer of monomers forming this thermoplastic resin, or a resin composition containing these resins modified with (meth)acrylic acid or urethane, which are used alone or in combination of two or more. In particular, an acrylic resin, a polyester resin, a polyolefin resin, a polystyrene resin, a copolymer of monomers forming these resins, and these listed resins modified with urethane are preferable. More specifically, an acrylic melamine resin alone; an acrylic melamine resin-containing composition, a resin composition in which a polyester resin is combined with a copolymer of ethylene and acrylic acid that is modified with urethane; a resin composition in which an acrylic resin is mixed with a copolymer emulsion of styrene and acrylic; and the like are preferable. Among these, the mold release layer 12 preferably consists of an acrylic melamine resin alone or a composition containing an acrylic melamine resin in 50 mass% or more.
The thickness of the mold release layer 12 typically falls with the range of about 0.01-5 µm, preferably 0.05-3 µm.

### Surface protection layer

The surface protection layer 13 consists of an ionizing radiation curing resin composition, providing excellent surface properties, particularly excellent contamination resistance to a decorative molded product obtained by using the decorative sheet of the present invention. The surface protection layer 13 may be a fully cured ionizing radiation curing resin composition or may be a half cured one. A cured material has excellent surface properties. Even curing resin compositions as described below provides good moldability.

The thickness of the surface protection layer 13 typically falls within the range of about 1-50 µm, preferably 5-20 µm. The surface protection layer 13 with a thickness falling within the above-mentioned range has excellent moldability as well as excellent contamination resistance.

The ionizing radiation curing resin composition used to form the surface protection layer 13 contains a multi-functional (meth)acrylate monomer with a molecular weight of 175-1000 and a thermoplastic resin with a predetermined weight-average molecular weight in a predetermined mass ratio. More specifically, the ionizing radiation curing resin composition has the aspect (a) in which the thermoplastic resin has a standard polystyrene equivalent weight-average molecular weight of 100,000-250,000, and the mass ratio of the multi-functional (meth)acrylate monomer to the thermoplastic resin is 25:75-75:25, or the aspect (b) in which the thermoplastic resin has a standard polystyrene equivalent weight-average molecular weight of from 10,000 to less than 100, 000, and the mass ratio of the multi-functional (meth) acrylate monomer to the thermoplastic resin is 10:90-75:25.

### Multi-functional (meth)acrylate monomer

The multi-functional (meth)acrylate monomer used in the present invention is a (meth)acrylate monomer with the number of functional groups of 2 or more and a molecular weight of 175-1000.
The number of functional groups of the multi-functional (meth)acrylate monomer is preferably 3 or more, more preferably 3-8, further more preferably 3-6, from the viewpoint of providing excellent contamination resistance and moldability to a decorative molded product.
The molecular weight of the multi-functional (meth)acrylate monomer is preferably 200-800, more preferably 250-600, further more preferably 250-400, from the viewpoint of providing excellent contamination resistance and moldability to a decorative molded product.

Specifically, such a multi-functional (meth) acrylate monomer preferably includes ethyleneglycol di(meth)acrylate, propylene glycol di(meth)acrylate, 1,4-butanediol di(meth)acrylate, 1,6-hexanediol di(meth)acrylate, neopentylglycol di(meth)acrylate, polyethylene glycol di(meth)acrylate, hydroxy pivalic acid neopentylglycol di(meth)acrylate, dicyclopentanyl di(meth)acrylate, caprolactone-modified dicyclo-pentenyl di(meth)acrylate, ethylene oxide-modified phosphoric acid di(meth)acrylate, allylated cyclohexyl di(meth)acrylate, isocyanurate di(meth)acrylate, trimethylolpropane tri(meth)acrylate, ethylene oxide-modified trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(acryloxyethyl) isocyanurate, propionic acid-modified dipentaerythritol penta(meth)acrylate, dipentaerythritol hexa(meth)acrylate, ethylene oxide-modified dipentaerythritol hexa (meth) acrylate, and caprolactone-modified dipentaerythritol hexa(meth)acrylate. In particular, pentaerythritol tri (meth)acrylate is more preferable.
In the present invention, the above-mentioned multi-functional (meth)acrylate monomer may be used alone or in combination of two or more.

### Thermoplastic resin

The thermoplastic resin used in the aspect (a) of the present invention is not limited in particular as far as the standard polystyrene equivalent weight-average molecular weight is 100,000-250,000. The weight-average molecular weight is measured by gel permeation chromatography (GPC) on the condition in which polystyrene is used as the standard sample.
The weight-average molecular weight of the thermoplastic resin used in the aspect (a) of the present invention is 100,000-250,000, preferably 100,000-200,000, and more preferably 100,000-170,000. The weight-average molecular weight of the thermoplastic resin falling within the above-mentioned range is preferable from the viewpoint of providing excellent contamination resistance and moldability to a decorative molded product. In particular, when the thermoplastic resin adopted in the aspect (a) is used, the decorative sheet has excellent contamination resistance, particularly to severe contaminating materials such as sunscreen cream and insect repellent spray.

The thermoplastic resin includes acryl resin, a polyvinyl acetal such as polyvinyl butyral (butyral resin), polyester resins such as polyethylene terephthalate, polybutylene terephthalate, and polybutylene terephthalate, a vinyl chloride resin, an urethane resin, styrene resins including polyolefins such as polyethylene and polypropylene, polystyrene, α-methyl styrene, acetal resins such as polyamide, polycarbonate, and polyoxymethylene, a fluorine resin such as an ethylene-4 ethylene fluoride copolymer, a polyimide resin, a polylactic acid resin, a polyvinyl acetal resin, a liquid crystal polyester resin. These resins may be used alone or in combination of two or more. In combination of two or more, a copolymer of monomers respectively composing each of the resins may be used, or a mixture of each of the resins may be used.

An acryl resin is preferable among the above-mentioned thermoplastic resins. An acryl resin with at least one (meth)acrylic acid ester monomer as a structural unit is more preferable. More specifically, a homopolymer of (meth)acrylic acid ester monomer, a copolymer of two or more kinds of different (meth) acrylic acid ester monomers, or a copolymer of a (meth) acrylic acid ester monomer and another monomer are preferable.

The (meth) acrylic acid ester monomer preferably includes, for example, (meth)acrylic acid methyl, (meth)acrylic acid ethyl, (meth)acrylic acid propyl, (meth)acrylic acid cyclohexyl, (meth)acrylic acid normal butyl, (meth)acrylic acid isobutyl, (meth)acrylic acid secondary butyl, (meth)acrylic acid tertiary butyl, (meth)acrylic acid isobornyl, 2-methyl-2--adamantyl(meth)acrylate, and 2-ethyl-2-adamantyl(meth)acrylate. Among these, (meth)acrylic acid methyl is more preferable.
The copolymer of two or more kinds of different (meth) acrylic acid ester monomers exemplifies a copolymer of two or more kinds of (meth)acrylic acid esters selected from the above-listed monomers. The copolymer may be a random copolymer, or may be a block copolymer.

Another monomer forming a copolymer with a (meth) acrylic acid ester monomer is not limited as far as copolymerized with a (meth) acrylic acid ester. However, in the present invention, this monomer preferably includes cycloaliphatic olefins monomers such as (meth)acrylic acid, styrene, maleic acid (anhydride), fumaric acid, divinylbenzene, vinylbiphenyl, vinylnaphthalene, diphenylethylene, vinyl acetate, vinyl chloride, vinyl fluoride, vinyl alcohol, acrylonitrile, acrylamide, butadiene, isoprene, isobutene, 1-butene, 2-butene, N-vinyl-2-pyrrolidone, dicyclopentadiene, ethylidene norbornane, and norbornenes; maleimides such as vinyl caprolactam, citraconic acid anhydride, and N-phenylmaleimide; and vinylethers. In particular, styrene and maleic acid (anhydride) are suitable as a copolymerization component. In other words, a binary copolymer of a (meth)acrylic acid ester and styrene or maleic acid (anhydride) and a ternary copolymer of a (meth) acrylic acid ester and styrene and maleic acid (anhydride) are preferable. The copolymer of a (meth) acrylic acid ester and another monomer may be a random copolymer, or may be a block copolymer.

The polydispersity of the acryl resin (weight-average molecular weight Mw/number-average molecular weight Mn) preferably falls within the range of 1.1-3.0. The polydispersity falling within this range provides excellent moldability and contamination resistance as well as surface properties such as wear resistance and abrasion-resistance. From this viewpoint, the polydispersity preferably falls within the range of 1.5-2.5.

The weight-average molecular weight of the thermoplastic resin used in the aspect (b) of the present invention is from 10, 000 to less than 100,000, preferably from 30,000 to less than 100,000. When the weight-average molecular weight of the thermoplastic resin falls within the above-mentioned range, the viscosity of the resin composition does not rise too much. Thus, the thermoplastic resin can be mixed with an ionizing radiation curing resin without being separated. Furthermore, no dried printing plates occur, leading improved printability and then the improved productivity of a decorative sheet. Even from the viewpoint of providing excellent contamination resistance and moldability to a decorative molded product, this range of weight-average molecular weight is preferable.

The thermoplastic resin adopted in the aspect (b) is not limited in particular as far as having the above-mentioned weight-average molecular weight. The type of the thermoplastic resin preferably exemplifies the resins as exemplified as the thermoplastic resin of the above-mentioned aspect (a).

### Mass ratio of multi-functional (meth)acrylate monomer to thermoplastic resin

The mass ratio of a multi-functional (meth)acrylate monomer to a thermoplastic resin in an ionizing radiation curing resin composition used in the aspect (a) is 25:75-75:25. If this mass ratio is less than 25:75, specifically, if the content of the multi-functional (meth)acrylate monomer in the resin composition is less than 25, excellent contamination resistance is not obtained. If this mass ratio is more than 75:25, specifically, if the content of the multi-functional (meth)acrylate monomer in the resin composition is more than 75, excellent moldability is not obtained, or the adhesion between the transfer layer and the resin compact after molding is not obtained. The mass ratio is preferably 30:70-70:30, more preferably 35:65-65:35 from the viewpoint of obtaining excellent contamination resistance and moldability.

The mass ratio of a multi-functional (meth)acrylate monomer to a thermoplastic resin in an ionizing radiation curing resin composition used in the aspect (b) is 10:90-75:25. If this mass ratio is less than 10:90, specifically, if the content of the multi-functional (meth)acrylate monomer in the resin composition is less than 10, excellent contamination resistance is not obtained, and the printability is decreased. If this mass ratio is more than 75:25, specifically, if the content of the multi-functional (meth)acrylate monomer in the resin composition is more than 75, excellent moldability is not obtained, or the adhesion between the transfer layer and the resin compact after molding is not obtained. The mass ratio is preferably 30:70-70:30, more preferably 35:65-65:35 from the viewpoint of providing excellent contamination resistance and moldability.

### Printability

The aspect (b) provides excellent contamination resistance and moldability while the ionizing radiation curing resin composition of the aspect (b) has excellent printability, so that excellent productivity is obtained. The printability represents the properties in which the ionizing radiation curing resin composition (ink) that has contacted with air is hardly coated and in which the resolubility is excellent, from the viewpoint of the easy formation of the surface protection layer by application If the ink is quickly dried and easily coated or if the resolubility is poor, a printing plate and a nozzle are clogged with ink, causing a dried printing plate resulting in the defective transfer of the ink. If coating mass is adhered to a doctor blade or a printed material, printing failure and defective coated surfaces easily occur.

A solvent with a low vapor pressure is added to suppress evaporation of the solvent in order to slow the coating formation, so that the printability can be improved. However, a long dryer and hot air are needed, resulting in the decrease of productivity. The method of applying an ionizing radiation curing resin composition has various problems. The typical problem of the application method will be explained below. Thus, in manufacturing a decorative sheet, the printability of the resin composition is directly connected with the productivity, which is an extremely important problem.
(i) Gravure coating causes clogging in a gravure printing plate, leading to defective coated surfaces such as the decreased amount of transfer, striation or scrape, unevenness, and insufficient leveling when a resin composition is transferred to a substrate. When a coating is formed on the doctor blade, a failure occurs in the scraping of ink, resulting in defective coated surfaces. When a coating formed on the doctor blade is adhered to a substrate, striated printing occurs, and then coating mass is transferred to the applied surface, deteriorating the condition of the applied surface.
(ii) Roll coating leads to defective coated surfaces such as the decreased amount of transfer, striation or scrape, unevenness, and insufficient leveling when a coating is formed on a roll. Then, a part of the coating formed on a roll is detached and transferred to a substrate through the roll, decreasing the smoothness of the applied surface. Furthermore, since coating mass is transferred to a substrate, the appearance of the coated film is deteriorated.
(iii) In die coating, liquid is not uniformly transferred to a substrate when a lip is clogged with the formed coating. This causes striated printing, or even worse application cannot be conducted. Comma coating may deteriorate the smoothness of the applied surface and may transfer coating mass to a substrate, deteriorating the appearance, when the comma shape gap part is coated.
(iv) Other coating methods, for example, curtain flow coating causes the cleavages of the formed coating of a resin composition from a slit-like nozzle and also leads the decreased thickness of the formed coating due to the formed coating. Spray coating causes a spray nozzle to be clogged due to the coating formation, inhibiting the formation of uniform surfaces in the same way as curtain flow coating does. Knife coating deteriorates the smoothness of the applied surface and then transfers coating mass to a substrate when a coating is formed on the knife doctor, causing the deteriorated appearance.

### Other additives

The ionizing radiation curing resin composition used in the present invention can contain components other than the above-mentioned multi-functional (meth)acrylate monomer and the above-mentioned thermoplastic resin without inhibiting the effect of the present invention.
For example, the ionizing radiation curing resin composition used in the present invention can contain a multi-functional (meth) acrylate oligomer such as an urethane (meth) acrylate oligomer, an epoxy (meth)acrylate oligomer, a polyester (meth)acrylate oligomer, or a polyether (meth)acrylate oligomer; or a monofunctional (meth)acrylate such as methyl(meth)acrylate, ethyl(meth)acrylate, propyl (meth)acrylate, butyl (meth)acrylate, pentyl(meth)acrylate, hexyl(meth)acrylate, cyclohexyl (meth)acrylate, 2-ethylhexyl (meth)acrylate, lauryl(meth)acrylate, stearyl(meth)acrylate, or isobornyl (meth)acrylate.

Other additives includes various additives regularly used for a resin composition, such as weather resistant improver, abrasion resistance enhancer, polymerization inhibitor, cross-linking agent, infrared absorbent, antistatic agent, adhesion enhancer, leveling agent, thixotropic agent, coupling agent, plasticizer, antifoaming agent, filler, solvent, and colorant.

To the surface protection layer 13, various additives are added to provide various functions, for example, with hardness and resistance to damage, such as hard coating function, antifog coating function, antifouling coating function, anti-glare coating function, antireflection coating function, ultraviolet screen coating function, and infrared screen coating function.
The surface of the surface protection layer 13 can optionally be subjected to corona discharge treatment or plasma treatment in order to improve the adhesion with the primer layer 14 provided on the surface protection layer.

### Primer layer

In the decorative sheet of the present invention, the primer layer 14 is preferably further laminated between the surface protection layer 13 and the decoration layer 15. Providing the primer layer 14 can further improve the adhesion of the surface protection layer 13 with the decoration layer 15. The primer layer 14 is preferably a transparent or translucent layer. For the primer layer, a polyurethane resin, a polyester resin, an acrylic resin, a vinyl acetate resin, a vinyl chloride-vinyl acetate copolymer resin, a cellulose resin, chlorinated polyethylene, and chlorinated polypropylene may be used alone or in combination of two or more. In particular, a polyurethane two-liquid curable resin or a mixture of a polyurethane two-liquid curable resin with a urethane resin is preferable.

As a polyurethane two-liquid curable resin, polymer polyols of, for example, a vinyl chloride-vinyl acetate copolymer, polyester, urethane, acrylic, polyether, polycarbonate, and the like are used alone or in combination thereof, in which a curing agent is added just before use.
The above-mentioned polymer polyol is preferably an acrylic polymer polyol or a polyester polymer polyol, more preferably an acrylic polymer polyol. The acrylic polymer polyol is preferably provided by copolymerizing a (meth)acrylic acid alkyl ester such as (meth)acrylic acid ethyl with a hydroxy acrylate such as 2-hydroxyethyl acrylate, 2-hydroxy-3-phenoxypropyl acrylate and then by introducing a plurality of hydroxyls. As the polyester polymer polyol, for example, poly(ethylene adipate), poly(butylene adipate), poly(neopentyl adipate), poly(hexamethylene adipate), poly (butylene azelaate), poly (butylene sebacate), polycaprolactone, and the like are used.

In the present invention, a mixture of the above-mentioned acrylic polymer polyol and a urethane resin is preferably used. In this case, the mixing (mass) ratio of an acrylic polymer polyol to a urethane resin is preferably 40:60-95:5, more preferably 60:40-90:10. This range of mixing ratio provides excellent adhesion.

The curing agent is preferably a multivalent isocyanate, including, for example, aromatic isocyanates such as 2,4-tolylene diisocyanate, xylylene diisocyanate, naphthalene diisocyanate, 4,4-diphenylmethane diisocyanate; and aliphatic (or cycloaliphatic) isocyanates such as 1,6-hexamethylene diisocyanate, 2,2,4-trimethylhexamethylene diisocyanate, isophorone diisocyanate, hydrogenated tolylene diisocyanate, and hydrogenated diphenylmethane diisocyanate; or adducts or multimers of the above-mentioned various isocyanates, for example, an adduct of tolylene diisocyanate and tolylene diisocyanate trimer.

In the present invention, the glass transition temperature Tg of a polymer polyol (uncured) used as a polyurethane two-liquid curable resin is preferably 65 °C or more. The upper limit of the glass transition temperature Tg is typically about 110 °C, more preferably falling within the range of 70-100 °C, but not limited thereto. The above-mentioned range of the glass transition temperature Tg provides excellent adhesion as well as good transfer properties.

The primer layer 14 can be obtained by a well-known method of applying and drying application liquid in which the above-mentioned resin is dissolved in the solvent. The thickness of the primer layer 14 usually falls within the range of about 0.5-20 µm, preferably 1-5 µm.

### Decoration layer

The decoration layer 15 is provides a design to a decorative sheet, which is typically composed of an image layer and/or a hiding layer. The image layer is provided to express patterned images such as a design and a character. The hiding layer is typically an entirely-covering layer to be provided for hiding coloration of an injection resin or the like. The hiding layer may be provided inside of the image layer to set out the design of the image layer, or may form a decoration layer by itself. The above-mentioned decoration layer may be a transparent transfer foil, or may be a color transfer foil.

The design of the image layer is optional, including, for example, a design consisting of a wood grain, a pebble grain, a texture grain, a sand grain, a geometrical pattern, a character, and the like.
The decoration layer 15 is formed on the above-mentioned primer layer 14 with printing ink by a well-known printing method such as gravure printing, offset printing, silk-screen printing, transfer printing from a transfer sheet, sublime transfer printing, or ink-jet printing. Eventually, the decoration layer is formed between the primer layer 14 and the adhesive layer 16 as shown in Fig. 1. The thickness of the decoration layer 15 is preferably 3-40 µm, more preferably 10-30 µm from a design viewpoint.

A binder resin of printing ink used to form the decoration layer 15 preferably includes a polyester resin, a polyurethane resin, an acrylic resin, a vinyl acetate resin, a vinyl chloride-vinyl acetate copolymer resin, and a cellulose resin. The binder resin preferably contains an acrylic resin alone or a mixture of an acrylic resin and a vinyl chloride-vinyl acetate copolymer resin as the main component. Mixing of an acrylic resin and a vinyl chloride-vinyl acetate copolymer resin or another acrylic resin preferably provides superior printability and moldability. The acrylic resin includes polymethyl(meth)acrylate, polyethyl(meth)acrylate, polybutyl(meth)acrylate, a methyl(meth)acrylate-butyl (meth)acrylate copolymer, and a methyl(meth)acrylate-styrene copolymer ((meth)acrylate referred to as acrylate or methacrylate), and an acryl resin modified with fluorine or the like, which can be used alone or in combination of two or more.

The above-mentioned vinyl chloride-vinyl acetate copolymer resin is preferably used, in which the vinyl acetate content is about 5-20 mass%, and the average degree of polymerization is about 350-900. The vinyl chloride-vinyl acetate copolymer resin may be copolymerized with a carboxylic acid such as maleic acid or fumaric acid as necessary. The mixing ratio of an acrylic resin to a vinyl chloride-vinyl acetate copolymer resin is about 1/9-9/1 (mass ratio). As the accessory component, another resin, for example, thermoplastic polyester resin, thermoplastic urethane resin, or a chlorinated polyolefin resin such as chlorinated polyethylene or chlorinated polypropylene may appropriately be mixed as necessary.

Besides the above-mentioned resins, acrylic polyols obtained by copolymerizing a (meth)acrylic acid alkyl ester such as methyl(meth)acrylate, ethyl(meth)acrylate, butyl (meth)acrylate, 2-ethylhexyl (meth)acrylate, or octyl(meth)acrylate with a (meth)acrylic acid ester with a hydroxyl group such as 2-hydroxyethyl(meth)acrylate, 2-hydroxybutyl(meth)acrylate, or 2-hydroxy-3-phenoxypropyl(meth)acrylate can be used.

As a colorant used for the decoration layer 15, metallic pigment consisting of scale-like foil powder of a metal, an alloy or a metallic compound such as aluminum, chromium, nickel, tin, titanium, iron phosphide, copper, gold, silver, or brass; pearlescent (pearl) pigment consisting of foil powder of micaceous iron oxide, titanium dioxide-coating mica, titanium dioxide-coating bismuth oxychloride, bismuth oxychloride, titanium dioxide-coating talc, fish scale foil, colored titanium dioxide-coating mica, basic lead carbonate, or the like; fluorescent pigments such as strontium aluminate, calcium aluminate, barium aluminate, zinc sulfide, and calcium sulfide; white inorganic pigments such as titanium dioxide, zinc oxide, and antimony trioxide; inorganic pigments such as zinc oxide, red oxide, vermillion, ultramarine blue, cobalt blue, titanium yellow, chrome yellow, and carbon black; and organic pigments (including dye) such as isoindolinone yellow, hansa yellow A, quinacridone red, permanent red 4R, phthalocyanine blue, indanthrene blue RS, and aniline black can be used alone or in combination of two or more.

The decoration layer 15 may further form a thin metallic film layer to improve the design of the decorative sheet. The thin metallic film layer can be formed using metal such as aluminum, chromium, gold, silver, or copper by a method such as vacuum deposition or sputtering, and may be formed thoroughly or a part thereof in a pattern.

In printing ink used to form the decoration layer 15, an antisettling agent, a curing catalyst, an ultraviolet absorber, an antioxidant, a leveling agent, a thickener, an antifoaming agent, or a lubricant can appropriately be added besides the above-mentioned components.

The printing ink is provided in a state in which the above-mentioned component is typically dissolved or dispersed in a solvent. Any solvents can be used as far as dissolving or dispersing a binder resin. Particularly, an organic solvent and/or water can be used. The organic solvent preferably includes hydrocarbons such as toluene and xylene; ketones such as acetone and methyl ethyl ketone; esters such as ethyl acetate, cellosolve acetate, and butyl cellosolve acetate; and alcohols.

### Adhesive layer

The adhesive layer 16 according to the present invention is formed to adhesively well transfer the transfer layer 17 sequentially provided with a surface protection layer 13, a primer layer 14, which is optionally provided, a decoration layer 15, and an adhesive layer 16 to a decorative molded product. The adhesive layer 16 is provided as necessary.

The adhesive layer 16 is formed of a heat-sensitive glue, a pressure reactive glue, or the like, which is preferably a heat sealing layer developing adhesion to a decorative molded product by heating or pressurizing as necessary.
A resin used for the adhesive composing the adhesive layer 16 includes at least one kind of resin selected from, for example, an acrylic resin, a vinyl chloride resin, a vinyl acetate resin, a vinyl chloride-vinyl acetate copolymer resin, a styrene-acrylic copolymer resin, a polyester resin, and a polyamide resin. The adhesive layer 16 can be formed by applying and drying one or two or more kinds of resins selected from the above-mentioned resins in a state capable of application such as a solution or an emulsion by means of gravure printing, screen printing, reverse coating using a gravure printing plate, or the like.
The thickness of the adhesive layer 16 is preferably about 0.1-6 µm from the viewpoint of the capability of adhesively well and effectively transferring a decorative sheet to a decorative molded product.

In the adhesive layer 16, an organic ultraviolet absorber such as a benzophenone compound, a benzotriazole compound, an oxalic acid anilide compound, a cyanoacrylate compound, or a salicylate compound; or a particulate inorganic additive with UV absorption capacity such as an oxide of a zinc, titanium, cerium, tin, or iron oxide can be added. As additive, a color pigment, a white pigment, a body pigment, a filler, an antistatic agent, an antioxidant, a fluorescent brightener, or the like can be appropriately added as necessary.

### Method of manufacturing decorative sheet

The decorative sheet of the present invention can be manufactured by the following steps of
[1] laminating the mold release layer 12 on the substrate sheet 11;
[2] laminating an ionizing radiation curing resin composition layer on the mold release layer 12;
[3] irradiating the ionizing radiation curing resin composition layer with ionizing radiation to cure or half cure the ionizing radiation curing resin composition layer so as to form the surface protection layer 13;
[4] optionally applying corona discharge treatment or plasma treatment to the surface of the surface protection layer 13;
[5] optionally laminating the primer layer 14 on the surface protection layer 13;
[6] optionally laminating the decoration layer 15 on the primer layer 14; and
[7] optionally laminating the adhesive layer 16 on the decoration layer 15.

In the method of laminating the mold release layer 12, the surface protection layer 13, the primer layer 14, the decoration layer 15, and the adhesive layer 16 on the substrate sheet 11, well-known printing means or application means such as a gravure printing or a roll coating is used as described above. When the decoration layer 15 is formed by combing an image layer with a hiding layer as described above, one of the image layer and the hiding layer may be laminated and dried, and then the other may be laminated.

The step [3] is to a cure or half cure the ionizing radiation curing resin composition layer laminated on the mold release layer 12 to form the surface protection layer 13. Typically, the cured resin composition layer preferably improves the surface properties such as contamination resistance but not obtains excellent moldability. However, in the present invention, since the above-mentioned predetermined resin composition obtains excellent moldability even when cured, the resin composition is preferably cured from the viewpoint of providing excellent moldability as well as good surface properties such as contamination resistance.

The ionizing radiation curing resin composition layer is cured by being irradiated with ionizing radiation such as electron beams or ultraviolet rays.
When electron beams are used as ionizing radiation, the accelerating voltage can appropriately be selected according to the resin to be used and the thickness of the layer but typically is preferably about 70-300 kV for curing the ionizing radiation curing resin composition. In the irradiation with electron beams, since the higher accelerating voltage increases the penetrating power, the accelerating voltage is selected so that the penetration depth of electron beams is substantially equal to the thickness of the resin layer, when a substrate deteriorated by electron beams is used as the substrate sheet 11. Accordingly, the substrate sheet 11 can be prevented from being extra irradiated with electron beams to minimize the deterioration of the substrate that is caused by extra electron beams.
The irradiation dose when the crosslink density of the resin composition layer is saturated is preferable, which is selected from the range of typically 5-300 kGy (0.5-30 Mrad), preferably 10-70 kGy (1-7 Mrad). Any electron beam sources can be used without any specific limitation, and therefore various electron beam accelerators such as a Cockcroft-Walton accelerator, a van de Graaff accelerator, a resonance transformer accelerator, an insulated core transformer accelerator, a linear accelerator, a dynamitron accelerator, and a high frequency accelerator can be used

When used as ionizing radiation, the ultraviolet rays are emitted at a wavelength of 190-380 nm. Any ultraviolet ray sources are used without any specific limitation, and therefore, for example, a high-pressure mercury lamp, a low-pressure mercury lamp, a metal halide lamp, and a carbon-arc lamp are used.

### Use of decorative sheet

When the ionizing radiation curing resin composition of the above-mentioned aspect (a) is used, the decorative sheet of the present invention can provide excellent contamination resistance and moldability to a decorative molded product, which has excellent contamination resistance, particularly to severe contaminating materials such as sunscreen cream and insect repellent spray.
When the ionizing radiation curing resin composition of the above-mentioned aspect (b) is used, the decorative sheet of the present invention can provide excellent contamination resistance and moldability to a decorative molded product, which has excellent contamination resistance, particularly to severe contaminating material such as sunscreen cream. Furthermore, since the printability of the resin composition forming the surface protection layer is excellent, the decorative sheet can be produced with good productivity, and as a result, the decorative molded product can also be produced with good productivity.
The decorative sheet of the present invention can take advantage of these properties to be suitably used to decorate members used in a wide range of fields of home electrical appliances, automobile interior parts and the like as well as the field of personal computers, particularly computer housings, and the like.

### Method of manufacturing decorative molded product

The decorative sheet of the present invention is suitably used for the injection-molding simultaneous transfer decorating method. The decorative molded product of the present invention can preferably be manufactured using the decorative sheet of the present invention by the injection-molding simultaneous transfer decorating method. More specifically, the decorative molded product of the present invention can be manufactured by the steps of:
(1) turning the substrate sheet side of the above-mentioned decorative sheet of the present invention to a mold and then closely attaching the decorative sheet to the inner surface to fit the attached decorative sheet on the shape of the inner surface;
(2) injecting injection resin in the mold;
(3) cooling the injection resin and then removing a decorative molded product from the mold; and
(4) removing a substrate sheet and a mold release layer from the decorative molded product.

In the above-mentioned step (1), the method of closely attaching the decorative sheet to the inner surface to fit the attached decorative sheet on the shape of the inner surface includes (i) heating the decorative sheet with a heating platen or (ii) vacuuming at normal temperature. In the heating method (i), the heating temperature preferably falls within the range of around the glass transition temperature of the substrate sheet or more and less than the melting temperature (or melting point). Typically, the heating method is more preferably conducted around the glass transition temperature. Around the glass transition temperature means the range of approximately a glass transition temperature ±5 °C. When a suitable polyester sheet is used as the substrate sheet, the temperature is about 70-130 °C.

In the above-mentioned step (2), the below-mentioned injection resin is melted and then injected in the cavity to integrate the injection resin with the decorative sheet. When being a thermoplastic resin, the injection resin is fluidized by heating and melting. When the injection resin is a thermosetting resin, the uncured liquid composition is maintained at room temperature or optionally heated. Then, the injection resin is injected and then cooled to be solidified. Accordingly, the decorative sheet is integrated and adhered with the formed resin compact to produce a decorative molded product. The heating temperature is set depending on the injection resin, and generally about 180-320 °C.

Then, the decorative molded product is cooled and then removed from the mold (Step (3)) to obtain a decorative molded product with a substrate sheet of the present invention sequentially provided with a resin compact, an adhesive layer, a surface protection layer, a mold release layer, and a substrate sheet. In addition, the substrate sheet and the mold release layer are released in the step (4) to obtain the decorative molded product of the present invention sequentially provided with a resin compact, an adhesive layer, and a surface protection layer.

### Injection resin

As the injection resin used for a decorative molded product, various resins can be used without specific limitation as far as a thermoplastic resin or a thermosetting resin (including a two liquid curing resin) that can be subjected to injection molding. Such a thermoplastics material includes, for example, vinyl polymers such as polyvinyl chloride and polyvinylidene chloride; styrene resins such as polystyrene, an acrylonitrile-styrene copolymer, and an ABS resin (acrylonitrile-butadiene-styrene copolymer resin); acrylic resins such as polymethyl (meth) acrylate, polyethyl(meth)acrylate, and polyacrylonitrile; polyolefin resins such as polyethylene, polypropylene and polybutene; polyester resins such as polyethylene terephthalate, an ethyleneglycol-terephthalic acid-isophthalic acid copolymer, and polybutylene terephthalate; and a polycarbonate resin. The thermosetting resin includes a two liquid reaction curable polyurethane resin and a two liquid reaction curable epoxy resin. These resins may be used alone or in combination of two or more.

In these resins, various additives such as an antioxidant, a thermal stabilizer, an ultraviolet absorber, a photostabilizer, a fire retardant, a plasticizer, inorganic substance powders such as silica, alumina, calcium carbonate, and aluminium hydroxide, fillers such as wood powder and glass fiber, a lubricant, a release agent, an antistatic agent, and the colorant can be added as necessary. As the injection resin, a resin colored by adding a colorant may be optionally used depending on the intended use. As the colorant, the same well-known colorants as those that can be used for the substrate sheet can be used.
The thickness of the injection resin compact composing a decorative molded product is selected depending on the intended use of the decorative molded product without any specific limitation, which is typically 1-5 mm, preferably 2-3 mm.

### Decorative molded product with substrate sheet and decorative molded product

The decorative molded product with a substrate sheet of the present invention can be manufactured, for example, using the decorative sheet of the present invention as described above, which is obtained through the steps (1) - (3). In the configuration of this decorative molded product, a resin compact, an adhesive layer, a surface protection layer, a mold release layer, and a substrate sheet are sequentially provided, in which the surface protection layer consists of an ionizing radiation curing resin composition containing a multi-functional (meth)acrylate monomer and a thermoplastic resin, the multi-functional (meth)acrylate monomer has a molecular weight of 175-1000, the thermoplastic resin has a predetermined weight-average molecular weight, and the multi-functional (meth)acrylate monomer and the thermoplastic resin are contained in a predetermined mass ratio. More specifically, the ionizing radiation curing resin composition has the aspect (a) in which the thermoplastic resin has a standard polystyrene equivalent weight-average molecular weight of 100,000-250,000, and the mass ratio of the multi-functional (meth)acrylate monomer to the thermoplastic resin is 25:75-75:25, or the aspect (b) in which the thermoplastic resin has a standard polystyrene equivalent weight-average molecular weight of from 10,000 to less than 100,000, and the mass ratio of the multi-functional (meth) acrylate monomer to the thermoplastic resin is 10:90-75:25.

The decorative molded product of the present invention can be manufactured, for example, using the decorative sheet of the present invention as described above, which is obtained through the steps (1) - (4). In the configuration of this decorative molded product, a resin compact, a resin compact, an adhesive layer, and a surface protection layer are sequentially provided, in which the surface protection layer consists of an ionizing radiation curing resin composition containing a multi-functional (meth)acrylate monomer and a thermoplastic resin, the multi-functional (meth) acrylate monomer has a molecular weight of 175-1000, and the molecular weight of the thermoplastic resin and the mass ratio of the multi-functional (meth)acrylate monomer to the thermoplastic resin are of the aspect (a) or (b).
The adhesive layer, the surface protection layer, the mold release layer, and the substrate sheet are the same as those explained as the layers of the decorative sheet of the present invention.

Fig. 2 shows a pattern diagram illustrating the cross section of an example preferred embodiment of the decorative molded product with a substrate sheet of the present invention. The decorative molded product 20 with a substrate sheet as shown in Fig. 2 has the configuration in which the transfer layer 17 consisting of the surface protection layer 13, the primer layer 14, the decoration layer 15, and the adhesive layer 16 is laminated on the resin compact 22 through the adhesive layer 16 and in which the mold release layer 12 and the substrate sheet 11 are laminated and integrated on the surface protection layer 13. The substrate sheet has the function as a protection sheet (masking film) so that the substrate sheet may be released, or may be kept as is, without being released, until released immediately before used. Using the substrate sheet as a protection sheet has the advantage that the substrate sheet can be used to protect the surface protection layer from a damage caused by friction generated when transported, or the like.

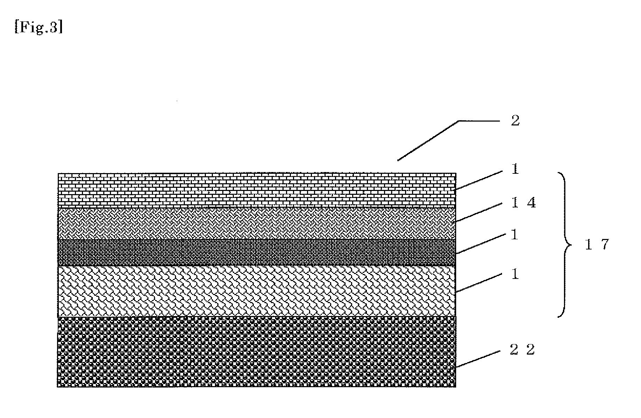

Fig. 3 shows a pattern diagram illustrating the cross section of an example preferred embodiment of the decorative molded product of the present invention. The decorative molded product 21 as shown in Fig. 3 has the configuration in which the transfer layer 17 consisting of the surface protection layer 13, the primer layer 14, the decoration layer 15, and the adhesive layer 16 is laminated and integrated on the resin compact 22 through the adhesive layer 16. The substrate sheet 11, the mold release layer 12, the surface protection layer 13, the primer layer 14, the decoration layer 15, and adhesive layer 16 are the same as those explained as the layers of the decorative sheet of the present invention.

When the ionizing radiation curing resin composition of the above-mentioned aspect (a) is used, the decorative molded product of the present invention has excellent finish by using the decorative sheet of the present invention that provides excellent contamination resistance and moldability, particularly to severe contaminating materials such as sunscreen cream and insect repellent spray.
When the ionizing radiation curing resin composition of the above-mentioned aspect (b) is used, the decorative molded product of the present invention has excellent finish by using the decorative sheet of the present invention that provides excellent contamination resistance and moldability, particularly to severe contaminating a material such as sunscreen cream. When the decorative sheet of the present invention is used, the printability of the resin composition forming the surface protection layer of the decorative sheet is excellent, so that the decorative sheet can be produced with good productivity. As a result, the decorative molded product can also be produced with good productivity.
The decorative molded product with a decorative sheet or the decorative molded product of the present invention can take advantage of these properties to be suitably used in a wide range of fields of home electrical appliances, automobile interior parts and the like as well as the field of personal computers, particularly computer housings, and the like.

### Examples

The present invention will be explained in more detail with reference to Examples below but is not limited thereto. First, Examples and Comparative Examples related to the above-mentioned aspect (a) will be explained.

### Evaluation method

### (a-1) Contamination resistance

A sunscreen cream ("SUNSCREEN LOTION (brand name)" available from Walgreens Company) and an insect repellent spray ("Cutter MAX100 (brand name)" available from Parkenna Company LLC) were applied to the decorative molded product obtained in each of Examples a-1 to a-4 and Comparative Examples a-1 to a-3. Then, the decorative molded product was left in an oven at 70 °C for one hour, removed from the oven, and then wiped to visually observe the surface of the decorative molded product. The evaluation was conducted based on the following criterion.
AA: The condition of the surface was not changed at all.
A: A part of the surface was negligibly rough, which is not a practical problem.
F: The surface was extremely rough.

### (a-2) Moldability (extensibility)

The decorative resin-molded product was produced using the decorative sheet obtained in each of Examples a-1 to a-4 and Comparative Examples a-1 to a-3 in the below-mentioned way, and then the appearance after molding was evaluated. The criterion is as follows.
AA: Coating cracks and bleaching are hardly seen in the surface protection layer, and good shape following was accomplished.
A: Some coating cracks and negligible bleaching are seen in the surface protection layer, which is not a practical problem.
F: Shape following was not able to be accomplished, and coating cracks and bleaching were seen in the surface protection layer.

### (a-3) Adhesion

A decorative resin-molded product was produced using the decorative sheet obtained by each of Examples a-1 to a-4 and the Comparative Examples a-1 to a-3 in the below-mentioned way, and then the adhesion of the formed coating after molding was evaluated based on J-SK5600.5-6 standard. The criterion is as follows.
AA: The formed coating was not detached at all.
F: The formed coating was significantly detached.

### Manufacturing of decorative resin-molded product (a)

The decorative sheet obtained by each of Examples a-1 to a-4 and the Comparative Examples a-1 to a-3 was heated at a heating platen temperature of 350 °C to set the temperature of the decorative sheet to 100 °C and then closely attached along the inner shape of a mold for injection molding by vacuum molding. The mold with a size of 80 mm square, a 3 mm aperture, and the shape of a tray with a corner R of 11 was used. On the other hand, an ABS resin ("KRALASTIC® MTH-2 (brand name)" available from NIPPON A&L INC.) was used as the injection resin, melted at 230 °C, and then injected in the cavity. The injection resin was removed from the mold with a temperature of 60 °C to obtain the decorative molded product 20 with the configuration as shown in Fig. 2, which was formed by transferring a transfer layer consisting of a substrate sheet, an image layer, a hiding layer, and an adhesive layer surface on the surface.

### Example a-1 (manufacturing of decorative sheet)

An acrylic melamine resin was applied to a biaxial stretched PET sheet (thickness: 75 µm) as a substrate sheet to which adhesive treatment was applied to form a mold release layer (thickness: 3 µm) by gravure printing.
Then, an ionizing radiation curing resin composition containing 40 mass part of a multi-functional (meth)acrylate monomer (pentaerythritol triacrylate, molecular weight: 298), 60 mass part of a thermoplastic resin with a weight-average molecular weight Mw of 150,000 (acryl resin, copolymer of methylmethacrylate and methacrylic acid, glass transition temperature Tg: 95 °C), 1.1 mass part of an ultraviolet absorber, 0.6 mass part of a photostabilizer, and 0.2 mass part of a leveling agent was applied on the above-mentioned mold release layer with a barcoater, and then irradiated with electron beams with an acceleration voltage of 165 kV and an irradiation dose of 50 kGy (5 Mrad) to be cross-linked and cured, so as to form a surface protection layer (thickness: 12 µm).
Then, the surface of the above-mentioned surface protection layer was subj ected to corona discharge treatment. On the surface, a solution containing a polyurethane two-liquid curable resin (a composition containing acrylic polymer polyol and xylylene diisocyanate as a curing agent so that the NCO equivalent is equal to the OH equivalent, glass transition temperature Tg (the polyol is uncured): 100 °C) was applied by gravure printing to form a primer layer (thickness: 1.5 µm).
Then, on the above-mentioned primer layer, black printing ink containing an acrylic resin and a vinyl chloride-vinyl acetate copolymer resin as a binder resin (acryl resin: 50 mass%, vinyl chloride-vinyl acetate copolymer resin: 50 mass%) was applied in an application quantity of 3 g/m² by gravure printing to form an entirely-covering decoration layer. On this layer, an acrylic resin (softening temperature: 125 °C) was applied by gravure printing in an application quantity of 4 g/m² to form an adhesive layer. As a result, the decorative sheet with the configuration as shown in Fig. 1 was produced.
The decorative sheet was evaluated by the above-mentioned method. The evaluation result is shown in Table a-1.

### Examples a-2 to a-3 and Comparative Examples a-1 to a-3

Except that a multi-functional (meth)acrylate monomer, a thermoplastic resin, and these mass ratios were used as shown in Table a-1, decorative sheets were produced in the same way as Example a-1 and then evaluated by the above-mentioned method, respectively. The evaluation results are shown in Table a-1.

### Example a-4

Except that for the formation of the primer layer, a solution containing a polyurethane two-liquid curable resin (a composition containing acrylic polymer polyol and xylylene diisocyanate as a curing agent so that the NCO equivalent is equal to the OH equivalent, glass transition temperature Tg (the polyol is uncured) : 100 °C); and an urethane resin (20 mass part to 80 mass part of the acrylic polymer polyol) was, a decorative sheet was produced in the same way as Example a-1 and then evaluated by the above-mentioned method. The evaluation result is shown in Table a-1.

**Table a-1**

| | | Examples | | | | Comparative Examples | | |
|---|---|---|---|---|---|---|---|---|
| | | a - 1 | a - 2 | a - 3 | a - 4 | a - 1 | a - 2 | a - 3 |
| Multi-functional (meth)acrylate | | I * ¹ | I * ¹ | I I * ² | I * ¹ | I * ¹ | I * ¹ | I * ¹ |
| | Number of functional groups | 3 | 3 | 3 | 3 | 3 | 3 | 3 |
| | Molecular weight | 298 | 298 | 692 | 298 | 298 | 298 | 298 |
| Thermoplastic resin * | | A | B | A | A | B | B | - |
| ⁴ | | | | | | | | |
| | Glass transition temperature T g | 95 | 105 | 95 | 9 5 | 105 | 105 | - |
| | Weight-average molecular weight | 150,00 | 120,00 0 | 150,00 0 | 150,00 0 | 120,00 0 | 120,00 0 | - |
| Mass ratio *⁵ | | 40/60 | | | | 20/ 80 | 80/ 20 | 100 /0 |
| Primer layer resin composition | | I * ⁶ | I * ⁶ | I * ⁶ | I I *⁷ | I * ⁶ | I * ⁶ | I * ⁶ |
| Contamination resistance | | | | | | | | |
| | Sunscreen cream | AA | AA | AA | AA | AA | AA | AA |
| | Insect repellent spray | AA | AA | AA | AA | F | AA | AA |
| Moldability Adhesion | | AA | AA | A | AA | AA | F | F |
| | | AA | AA | AA | AA | AA | F | F |

| | | | | | | | | |
|---|---|---|---|---|---|---|---|---|
| *1, Multi-functional (meth)acrylate I: pentaerythritol triacrylate, molecular weight: 298 *2, Multi-functional (meth)acrylate II: ethylene oxide-modified trimethylolpropane triacrylate, molecular weight: 692 *3, Multi-functional (meth)acrylate III: ethylene oxide-modified pentaerythritol tetraacrylate, molecular weight: 572 *4, The following thermoplastic resins were used. Thermoplastic resin A: weight-average molecular weight: 150,000, glass transition temperature Tg: 95 °C, copolymer of methylmethacrylate and methacrylic acid Thermoplastic resin B: weight-average molecular weight: 120,000, glass transition temperature Tg: 105 °C, methylmethacrylate homopolymer *5, Mass ratio of multi-tunctional (meth) acrylate to thermoplastic resin *6, Primer layer resin composition I: polyurethane two-liquid curable resin *7 Primer layer resin composition II: mixture of polyurethane two-liquid curable resin and urethane resin | | | | | | | | |

Next, Examples and Comparative Examples related to the above-mentioned aspect (b) will be explained.

### Evaluation method

### (b-1) Contamination resistance

A sunscreen cream ("SUNSCREEN LOTION (brand name)" available from Walgreens Company) was applied to the decorative molded product obtained in each of examples b-1 to b-9 and Comparative Examples b-1 to b-4. Then, the decorative molded product was left in an oven at 70 °C for one hour, removed from the oven, and then wiped to visually observe the surface of the decorative molded product. The evaluation was conducted based on the following criterion. "+" shown in Table b-1 represents a superior evaluation. For example, "A+" represents an evaluation superior "A" but inferior to "AA."
AA: The condition of the surface was not changed at all.
A: A part of the surface was negligibly rough, which is not a practical problem.
F: The surface was extremely rough.

### (B-2) Moldability (extensibility)

The decorative resin-molded product was produced using the decorative sheet obtained in each of Examples b-1 to b-9 and Comparative Example b-1 to b-4 in the below-mentioned way, and the appearance after molding was evaluated. The criterion is as follows.
"+" shown in Table b-1 represents a superior evaluation. For example, "A+" represents an evaluation superior "A" but inferior to "AA."
AA: Coating cracks and bleaching are hardly seen in the surface protection layer, and good shape following was accomplished.
A: Some coating cracks and negligible bleaching are seen in the surface protection layer, which is not a practical problem.
F: Shape following was not able to be accomplished, and coating cracks and bleaching were seen in the surface protection layer.

### (b-3) Adhesion

A decorative resin-molded product was produced using the decorative sheet obtained by each of Examples b-1 to b-9 and the Comparative Examples b-1 to b-4 in the below-mentioned way, and then the adhesion of the formed coating after molding was evaluated based on J-SK5600.5-6 standard. The criterion is as follows.
AA: The formed coating was not detached at all.
F: The formed coating was significantly detached.

### (b-4) Printability (coatability of resin composition)

In each of Examples b-1 to b-9 and Comparative Examples b-1 to b-4, the time to form a coating on the surface of application liquid containing a resin composition that was obtained by the below-mentioned preparation was measured and evaluated by the following method as a simple evaluation method of the continuous application properties of an ionizing radiation curing resin composition used to form a surface protection layer.

### (i) Preparation of application liquid

Application liquid was prepared in a solvent composition of ethyl acetate/MIBK = 1/1 for the resin composition used in each of Examples b-1 to b-9 and Comparative Examples b-1 to b-4 so that the concentration of the solid content (weight of resin content other than solvent/total weight of ink) is about 30%. The resin composition containing only a multi-functional (meth)acrylate monomer of Comparative Example 6 was evaluated as is, because the resin composition is a liquid at normal temperature.

### (ii) Test procedure

2 g of ink (solid content: about 30%) was added dropwise to a watch glass, and then the time to find a coating was measured under a room temperature environment (25 °C, humidity: about 50 RH%).

### (iii) Evaluating

AA: Coated at a time of 10 minutes or more.
A: Coated at a time of 5-10 minutes.
F: Coated within 5 minutes.

### Manufacturing of decorative resin-molded product (b)

The decorative sheet obtained by each of Examples b-1 to b-9 and the Comparative Examples b-1 to b-4 was heated at a heating platen temperature of 350 °C to set the temperature of the decorative sheet to 100 °C and then closely attached along the inner shape of a mold for injection molding by vacuum molding. The mold with a size of 80 mm square, a 3 mm aperture, and the shape of a tray with a corner R of 11 was used. On the other hand, an ABS resin ("KRALASTIC ® MTH-2 (brand name)" available from NIPPON A&L INC.) was used as the injection resin, melted at 230 °C, and then injected in the cavity. The injection resin was removed from the mold with a temperature of 60 °C to obtain the decorative molded product 20 with the configuration as shown in Fig. 2, which was formed by transferring a transfer layer consisting of a substrate sheet, an image layer, a hiding layer, and an adhesive layer surface on the surface.

### Example b-1 (manufacturing of decorative sheet)

An acrylic melamine resin was applied to a biaxial stretched PET sheet (thickness: 75 µm) as a substrate sheet to which adhesive treatment was applied to form a mold release layer (thickness: 3 µm) by gravure printing.
Then, an ionizing radiation curing resin composition containing 40 mass part of a multi-functional (meth)acrylate monomer (pentaerythritol triacrylate, molecular weight: 298), 60 mass part of a thermoplastic resin with a weight-average molecular weight Mw of 95000 (acryl resin, copolymer of methylmethacrylate and methacrylic acid, glass transition temperature Tg: 105 °C), 1.1 mass part of an ultraviolet absorber, 0.6 mass part of a photostabilizer, and 0.2 mass part of a leveling agent was applied on the above-mentioned mold release layer with a barcoater, and then irradiated with electron beams with an acceleration voltage of 165 kV and an irradiation dose of 50 kGy (5 Mrad) to be cross-linked and cured, so as to form a surface protection layer (thickness: 12 µm).
Then, the surface of the above-mentioned surface protection layer was subjected to corona discharge treatment. On the surface, a solution containing a polyurethane two-liquid curable resin (a composition containing acrylic polymer polyol and xylylene diisocyanate as a curing agent so that the NCO equivalent is equal to the OH equivalent, glass transition temperature Tg (the polyol is uncured) : 100 °C) was applied to form a primer layer (thickness: 1.5 µm).
Then, on the above-mentioned primer layer, black printing ink containing an acrylic resin and a vinyl chloride-vinyl acetate copolymer resin as a binder resin (acryl resin: 50 mass%, vinyl chloride-vinyl acetate copolymer resin: 50 mass%) was applied in an application quantity of 3 g/m² by gravure printing to form an entirely-covering decoration layer. On this layer, an acrylic resin (softening temperature: 125 °C) was applied by gravure printing in an application quantity of 4 g/m² to form an adhesive layer. As a result, the decorative sheet with the configuration as shown in Fig. 1 was produced.
The decorative sheet was evaluated by the above-mentioned method. The evaluation result is shown Table b-1.

### Examples b-2 to b-8 and Comparative Examples b-1 to b-4

Except that a multi-functional (meth)acrylate monomer, a thermoplastic resin, and these mass ratios were used as shown in Table b-1, decorative sheets were produced in the same way as Example b-1 and then evaluated by the above-mentioned method, respectively. The evaluation results of Example b-2 to b-8 are shown in Table b-1, and the evaluation results of Comparative Examples b-1 to b-4 are shown in Table b-2.

### Example b-9

Except that for the formation of the primer layer, a solution containing a polyurethane two-liquid curable resin (a composition containing acrylic polymer polyol and xylylene diisocyanate as a curing agent so that the NCO equivalent is equal to the OH equivalent, glass transition temperature Tg (the polyol is uncured): 100 °C); and an urethane resin (20 mass part to 80 mass part of the acrylic polymer polyol) was used, a decorative sheet was produced in the same way as Example b-1 and then evaluated by the above-mentioned method. The evaluation result is shown in Table b-1.

**Table b-1**

| | | Examples | | | | | | | | |
|---|---|---|---|---|---|---|---|---|---|---|
| | | b - 1 | b-2 | b - 3 | b - 4 | b - 5 | b - 6 | b - 7 | b - 8 | b - 9 |
| Multi-functional (meth)acrylate | | I *¹ | I *¹ | I *¹ | II * ² | I I * ² | I I I *³ | I *¹ | I *¹ | I *¹ |
| | Number of functional groups | 3 | 3 | 3 | 3 | 3 | 4 | 3 | 3 | 3 |
| | Molecular weight | 298 | 298 | 298 | 692 | 692 | 572 | 298 | 298 | 298 |
| Thermoplastic resin | | A | B | C | D | E | E | A | A | A |
| *⁴ | | | | | | | | | | |
| | Glass transition temperature T g | 105 | 105 | 105 | 105 | 55 | 55 | 105 | 105 | 105 |
| | Weight-average molecular weight | 95,000 | 45,000 | 25,000 | 85,000 | 65,000 | 65,000 | 95,000 | 95,000 | 95,000 |
| Mass ratio *⁵ | | 40/60 | | | | | | 20/ 80 | 70/ 30 | 40/ 60 |
| Primer layer resin composition | | I *⁶ | I *⁶ | I *⁶ | I *⁶ | I *⁶ | I *⁶ | I *⁶ | I *⁶ | I I * 7 |
| Contamination resistance | | AA | AA | A⁺ | A | A | A | AA | AA | AA |
| Moldability | | AA | AA | AA | A | A | A | AA | A⁺ | AA |
| Adhesion | | AA | AA | AA | AA | AA | AA | AA | AA | AA |
| Printability | | AA | AA | AA | AA | AA | AA | AA | AA | AA |

| | | | | | | | | | | |
|---|---|---|---|---|---|---|---|---|---|---|
| *1, Multi-functional (meth)acrylate I: pentaerythritol triacrylate, molecular weight: 298 *2, Multi-functional (meth)acrylate II: ethylene oxide-modified trimethylolpropane triacrylate, molecular weight: 692 *3, Multi-functional (meth)acrylate III: ethylene oxide-modified pentaerythritol tetraacrylate, molecular weight: 572 *4, The following thermoplastic resins were used. Thermoplastic resin A: weight-average molecular weight: 95,000, glass transition temperature Tg: 105 °C, copolymer of methylmethacrylate, styrene, and maleic anhydride Thermoplastic resin B: weight-average molecular weight: 45,000, glass transition temperature Tg: 105 °C, methylmethacrylate homopolymer Thermoplastic resin C: weight-average molecular weight: 25,000, glass transition temperature Tg: 105 °C, copolymer of methylmethacrylate and methacrylic acid Thermoplastic resin D: weight-average molecular weight: 85,000, glass transition temperature Tg: 105 °C, copolymer of methylmethacrylate, styrene, and maleic anhydride Thermoplastic resin E: weight-average molecular weight: 65,000, glass transition temperature Tg: 55 °C, copolymer of methylmethacrylate and methacrylic acid Thermoplastic resin F: weight-average molecular weight: 120,000, glass transition temperature Tg: 105 °C, methylmethacrylate homocopolymer *5, Mass ratio of multi-functional (meth) acrylate to thermoplastic resin *6, Primer layer resin composition I: polyurethane two-liquid curable resin, *7 Primer layer resin composition II: mixture of polyurethane two-liquid curable resin and urethane resin | | | | | | | | | | |

**Table b-2**

| | | Comparative Examples | | | |
|---|---|---|---|---|---|
| | | b - 1 | b - 2 | b - 3 | b - 4 |
| Multi-functional (meth) acrylate | | I * ¹ | I * ¹ | I * ¹ | - |
| | Number of functional groups | 3 | 3 | 3 | - |
| | Molecular weight | 298 8 | 298 | 298 | - |
| Thermoplastic resin *4 | | F | A | - | A |
| | Glass transition temperature T g | 105 | 105 | - | 105 |
| | Weight-average molecular weight | 120,000 | 95,000 | - | 95,000 |
| Mass ratio * ⁵ | | 80/20 | | 100 /0 | 0/1 00 |
| Primer layer resin composition | | I *⁶ | I *⁶ | I *⁶ | I *⁶ |
| Contamination resistance | | AA | AA | AA | F |
| Moldability | | F | F | F | AA |
| Adhesion | | F | F | F | AA |
| Printability | | F | AA | AA | A |

| | | | | | |
|---|---|---|---|---|---|
| *, *1, *4, *5, and *6 are the same as those of Table b-1. | | | | | |

### INDUSTRIAL APPLICABILITY

The decorative sheet of the present invention is useful as a decorative sheet used for the injection-molding simultaneous transfer decorating method to provide a design to a decorative resin-molded product.
When the ionizing radiation curing resin composition of the above-mentioned aspect (a) is used, the decorative sheet of the present invention can provide excellent contamination resistance and moldability to a decorative molded product, so that the decorative molded product of the present invention has excellent finish by using the decorative sheet of the present invention that provides excellent contamination resistance and moldability. When the ionizing radiation curing resin composition of the above-mentioned aspect (b) is used, the decorative sheet of the present invention can provide excellent contamination resistance and moldability to a decorative molded product, so that the decorative molded product of the present invention has excellent finish by using the decorative sheet of the present invention that provides excellent contamination resistance and moldability. In addition, since the printability of the resin composition forming the surface protection layer is excellent, the decorative sheet can be produced with good productivity, and as a result, the decorative molded product can also be produced with good productivity.
The decorative molded product of the present invention can be suitably used in a wide range of fields of home electrical appliances, automobile interior parts and the like as well as the field of personal computers, particularly computer housings, and the like.

## Claims

1. A decorative sheet comprising a mold release layer and a surface protection layer, the mold release layer and the surface protection layer being sequentially provided on the one side of a substrate sheet, wherein the surface protection layer consists of an ionizing radiation curing resin composition containing a multi-functional (meth)acrylate monomer and a thermoplastic resin, the multi-functional (meth)acrylate monomer has a molecular weight of 175-1000, the thermoplastic resin has a standard polystyrene equivalent weight-average molecular weight of 100,000-250,000, and the mass ratio of the multi-functional (meth)acrylate monomer to the thermoplastic resin is 25:75-75:25.

2. A decorative sheet comprising a mold release layer and a surface protection layer, the mold release layer and the surface protection layer being sequentially provided on the one side of a substrate sheet, wherein the surface protection layer consists of an ionizing radiation curing resin composition containing a multi-functional (meth)acrylate monomer and a thermoplastic resin, the multi-functional (meth)acrylate monomer has a molecular weight of 175-1000, the thermoplastic resin has a standard polystyrene equivalent weight-average molecular weight of from 10,000 to less than 100,000, and the mass ratio of the multi-functional (meth)acrylate monomer to the thermoplastic resin is 10:90-75:25.

3. The decorative sheet according to claim 1 or 2, wherein the multi-functional (meth) acrylate monomer has 3-8 functional groups.

4. The decorative sheet according to any one of claims 1 to 3, wherein the thermoplastic resin is an acryl resin containing a (meth)acrylic acid ester monomer as a structural unit.

5. The decorative sheet according to any one of claims 1 to 4, wherein the surface protection layer is a cured ionizing radiation curing resin composition.

6. A decorative molded product with a substrate sheet comprising a resin compact, an adhesive layer, a surface protection layer, a mold release layer, and a substrate sheet, the resin compact, the adhesive layer, the surface protection layer, the mold release layer, and the substrate sheet being sequentially provided, where the surface protection layer consists of an ionizing radiation curing resin composition containing a multi-functional (meth)acrylate monomer and a thermoplastic resin, the multi-functional (meth)acrylate monomer has a molecular weight of 175-1000, the thermoplastic resin has a standard polystyrene equivalent weight-average molecular weight of 100,000-250,000, and the mass ratio of the multi-functional (meth)acrylate monomer to the thermoplastic resin is 25:75-75:25.

7. A decorative molded product comprising a resin compact, an adhesive layer, and a surface protection layer, the resin compact, the adhesive layer, and the surface protection layer being sequentially provided, wherein the surface protection layer consists of an ionizing radiation curing resin composition containing a multi-functional (meth)acrylate monomer and a thermoplastic resin, the multi-functional (meth)acrylate monomer has a molecular weight of 175-1000, the thermoplastic resin has a standard polystyrene equivalent weight-average molecular weight of 100,000-250,000, and the mass ratio of the multi-functional (meth)acrylate monomer to the thermoplastic resin is 25:75-75:25.

8. A decorative molded product with a substrate sheet comprising a resin compact, an adhesive layer, a surface protection layer, a mold release layer, and a substrate sheet, the resin compact, the adhesive layer, the surface protection layer, the mold release layer, and the substrate sheet being sequentially provided, wherein the surface protection layer consists of an ionizing radiation curing resin composition containing a multi-functional (meth)acrylate monomer and a thermoplastic resin, the multi-functional (meth) acrylate monomer has a molecular weight of 175-1000, the thermoplastic resin has a standard polystyrene equivalent weight-average molecular weight of from 10,000 to less than 100,000, and the mass ratio of the multi-functional (meth)acrylate monomer to the thermoplastic resin is 10:90-75:25.

9. A decorative molded product comprising a resin compact, an adhesive layer, and a surface protection layer, the resin compact, the adhesive layer, and the surface protection layer being sequentially provided, wherein the surface protection layer consists of an ionizing radiation curing resin composition containing a multi-functional (meth)acrylate monomer and a thermoplastic resin, the multi-functional (meth)acrylate monomer has a molecular weight of 175-1000, the thermoplastic resin has a standard polystyrene equivalent weight-average molecular weight of from 10,000 to less than 100,000, and the mass ratio of the multi-functional (meth)acrylate monomer to the thermoplastic resin is 10:90-75:25.
